(19) **Europäisches Patentamt**

**European Patent Office**

**Office européen des brevets**

(11) Veröffentlichungsnummer: **0 151 712**
**B1**

(12) **EUROPÄISCHE PATENTSCHRIFT**

(45) Veröffentlichungstag der Patentschrift:
01.03.89

(51) Int. Cl.⁴: **G 09 B 21/00**

(21) Anmeldenummer: **84114334.0**

(22) Anmeldetag: **27.11.84**

(54) Einrichtung zur Darstellung von Informationen auf einem Lesegerät für Blinde.

(30) Priorität: **03.01.84 DE 3400093**

(43) Veröffentlichungstag der Anmeldung:
**21.08.85 Patentblatt 85/34**

(45) Bekanntmachung des Hinweises auf die Patenterteilung:
**01.03.89 Patentblatt 89/9**

(84) Benannte Vertragsstaaten:
**AT CH DE FR GB LI NL SE**

(56) Entgegenhaltungen:
**EP-A- 0 061 676**
**DE-A- 2 501 835**
**DE-A- 2 833 979**
**DE-B- 2 204 867**

(73) Patentinhaber: **Nixdorf Computer Aktiengesellschaft,**
**Fürstenallee 7, D-4790 Paderborn (DE)**

(72) Erfinder: **Burchart, Joachim, Am Fichtenhain 14,**
**D-4797 Schlangen 2 (DE)**

(74) Vertreter: **Schaumburg, Thoenes & Englaender,**
**Mauerkircherstrasse 31 Postfach 86 07 48,**
**D-8000 München 80 (DE)**

**Beschreibung**

Die Erfindung betrifft eine Einrichtung gemäß dem Oberbegriff des Anspruchs 1.

Derartige Einrichtungen erlauben die Darstellung von Blindenschrift und/oder Graphik auf einer Lesetafel.

Die DE-A-2 833 979 zeigt bereits eine Einrichtung der im Oberbegriff des Anspruches 1 genannten Art, d.h., die Zeichenelemente können zur Darstellung von Blindenschriftzeichen oder für Reliefwiedergaben verwendet werden. Es ist dieser Druckschrift jedoch nicht zu entnehmen, ob die Gesamtheit aller Zeichenelemente in Zeichenfelder ansteuerbar ist, ob und wie bei der Darstellung von Blindenschriftzeichen die nötigen Abstände zwischen diesen Zeichen gewährleistet ist, ob die Darstellung mehrerer Blindenschriftzeilen möglich ist und wie gegebenenfalls der erforderliche Zeilenabstand sichergestellt wird usw. Es besteht ein Bedürfnis, die auf einem Bildschirm darstellbaren Informationen möglichst weitgehend auch Blinden zugänglich zu machen. Die genannte Druckschrift enthält jedoch keine Anweisungen, wie eine Blinden-Lesetafel zu organisieren ist, damit sowohl nicht an Zeichenfelder gebundene «freie» Graphiken als auch an bestimmte Zeichenfelder «gebundene» Graphiken (etwa entsprechend den Bildschirmtextgraphiken) und alphanumerische Zeichen darstellbar sind, wobei insbesondere darauf zu achten ist, daß bei der Übertragung von gemischten Text- und Graphikdarstellungen auf eine Blinden-Lesetafel der räumliche Zusammenhang zwischen den einzelnen Darstellungselementen nicht verlorengehen darf. Weiter ist dafür zu sorgen, daß die Übertragung von Graphiken vom Bildschirm auf die Lesetafel verzerrungsfrei erfolgt und daß bei der Umsetzung von Buchstabenschrift in Blindenschrift die für blinde Leser geläufigen Buchstaben-, Wort- und Zeilenabstände eingehalten werden.

Es wird auch auf die DE-A-3 112 438 verwiesen, die ein Gerät beschreibt, mit dem die zeilenweise Darstellung einer Videotext- oder Bildschirmtextseite ermöglicht wird.

Es ist die Aufgabe der vorliegenden Erfindung, eine Einrichtung der im Oberbegriff des neuen Anspruchs 1 genannten Art zu schaffen, mit der die Darstellung taktiler Blindenschrift in übersichtlicher, gut lesbarer Form und die Darstellung taktiler Bilder, insbesondere entsprechend der bei Bildschirmen üblichen Wiedergabe, möglich ist.

Diese Aufgabe ist erfindungsgemäß durch die im Kennzeichen des neuen Anspruches 1 angegebenen Merkmale gelöst.

Die Steuerschaltung ist so ausgelegt, daß die Gesamtheit der in gleichmäßiger Rasterung auf einer Lesetafel angeordneten Zeichenelemente in zeilenweise und spaltenweise geordnete Zeichenfelder «aufteilbar» ist, wobei in jedem Zeichenfeld entweder ein alphanumerisches Zeichen oder ein graphisches Zeichen darstellbar ist; für «freie» Graphiken wird der gesamte Vorrat an Zeichenelementen ohne Berücksichtigung der Zeichenfelder benutzt.

Die Zeichenfelder selbst sind wiederum so steuerbar, daß einerseits zur Darstellung von «gebundenen» Graphiken entsprechend der Bildschirmtextdarstellung jeweils 2 × 3 Unterfelder aktivierbar sind und daß andererseits zur Darstellung von Blindenschriftzeichen jeweils ein innerer Bereich mit einer herkömmlichen Blindenschriftzeichenform aktivierbar ist, während diesen inneren Bereich umgebende Randbereiche zur Trennung der Blindschriftzeichten voneinander gelöscht bleiben.

Auf diese Weise gelingt es, alle oben genannten Forderungen zu erfüllen.

Zur Darstellung von Schriftzeichen in Blindenschrift werden jeweils bestimmte innere Bereiche der Zeichenfelder verwendet, welche voneinander durch wenigstens eine Reihe von Zeichenelementen getrennt sind. Jeder dieser Bereiche ist zur Darstellung eines Blindenschriftzeichens bestimmt. Die zwischen den Bereichen für die Blindenschriftzeichen angeordneten, diese trennenden Zeichenelemente haben bei der Darstellung von Schriftzeichen keine Funktion, das heißt sie bleiben ungesetzt, so daß zwischen den einzelnen Schriftzeichen deutliche Abstände bestehen. Zur Darstellung von Graphiken oder dgl. können alle Zeichenelemente Verwendung finden, wobei je nach Anordnungsdichte der Zeichenelemente eine mehr oder weniger gute Auflösung gegeben ist.

Zur Darstellung von Videotextseiten, Bildschirmtextseiten oder dgl. ist in einer Ausgestaltung der Erfindung vorgesehen, daß die Lesetafel eine der Anzahl und Anordnung der Zeichen einer Bildschirmseite entsprechende Anzahl und Anordnung von Zeichenfeldern aufweist. Nach derzeitiger Norm hat eine Bildschirmseite 24 Zeilen zu je 40 Zeichen. Die Lesetafel weist dann ebenfalls 24 Zeilen mit je 40 Zeichenfeldern auf.

Um der Darstellung einer Bildschirmseite möglichst nahe zu kommen, ist weiterhin erfindungsgemäß vorgesehen, daß die inneren Bereiche der Zeichenfelder zur Darstellung der Blindenschriftzeichen als Braille-Formen mit vorzugsweise 8 Zeichenelementen ausgebildet sind und daß jede Braille-Form allseitig einreihig von Zeichenelementen umrahmt ist, so daß jedes Zeichenfeld 4 × 6 Zeichenelemente enthält.

Die auf dem Bildschirm durch eine 5 × 10 Matrix dargestellten Schriftzeichen werden auf der Lesetafel durch eine Braille-Form mit 2 × 4 Zeichenelementen wiedergegeben.

Jedes Zeichenfeld mit 4 × 6 Zeichenelementen läßt sich auch als Matrixblock auffassen, welcher jeweils 2 × 3 Unterfelder enthält, wobei jedes der Unterfelder seinerseits aus 3 × 2 Zeichenelementen gebildet wird. Ein derartiger Matrixblock eignet sich insbesondere zur Wiedergabe der beim Videotext- bzw. Bildschirmtextverfahren für die Komposition von Graphiken verwendeten Graphiksymbole, wie weiter hinten genauer beschrieben wird. Es sei erwähnt, daß die Aufteilung der Gesamtmenge aller Zeichenelemente in einzelne Unterfelder bzw. Zeichenfelder äußerlich nicht sichtbar sein muß. Diese Aufteilung kann vielmehr rein schaltungstechnisch organisiert sein und dient nur dazu, definierte Zeichenfelder für die Darstellung bestimmter Zeichen feszulegen.

In einer bevorzugten Ausgestaltung der Erfindung umfassen die Mittel zum Setzen und Löschen der Zeichenelemente jeweils diesen zugeordnete elektrische Betätigungsantriebe sowie eine Steuereinrichtung zum Ansteuern dieser Betätigungsantriebe. Die Steuereinrichtung weist eine an ein Bildschirmgerät oder dgl. anschließbare Speichereinheit zum Speichern wenigstens der eine Bildschirmseite bildenden Informationssignale und einen Zeichengenerator zum Umsetzen dieser Informationssignale in ein der Bildschirmseite entsprechendes taktiles Zeichenmuster sowie zum Ansteuern der Zeichenelemente entsprechend diesem Zeichenmuster auf. Als Bildschirmgeräte werden hier ganz allgemein alle zur Erzeugung von Bildschirmseiten geeigneten Geräte verstanden, also beispielsweise auch mit Videotext- bzw. Bildschirmtextdekodern versehene Empfangsbauteile, wie Videorekorder oder dgl. Die einer Bildschirmseite entsprechenden Informationssignale werden in die Speichereinheit übernommen und einem Zeichengenerator zugeführt, welcher diese Informationssignale in ein auf der Lesetafel darstellbares Zeichenmuster umsetzt. Die Zeichenelemente der Lesetafel werden entsprechend diesem Zeichenmuster gesetzt.

Nach derzeitiger Norm ist eine Bildschirmseite in 24 Zeilen zu je 40 Zeichen aufgeteilt. Eine zur Wiedergabe einer ganzen Bildschirmseite bestimmte Lesetafel weist demnach bei der vorbeschriebenen Zeichenelementanordnung $24 \times 40$ Zeichenfelder mit je $4 \times 6$ Zeichenelementen, das sind insgesamt 23 040 Zeichenelemente, auf. Um den Aufwand für das Setzen und Löschen der Zeichenelemente sowie das Festhalten derselben in ihrer gesetzten bzw. gelöschten Lage trotz der Vielzahl der Zeichenelemente in Grenzen zu halten, ist vorgesehen, daß die Zeichenelemente in ihrer gesetzten bzw. gelöschten Stellung jeweils eigenstabile Lagen einnehmen; als Mittel zum Setzen bzw. Löschen der Zeichenelemente dienen in Setz- bzw. Löschrichtung wirkende Stempel. Diese können sich nach dem Setz- bzw. Löschvorgang wieder zurückziehen, da sie keine Haltekraft aufbringen müssen. Diese Lösung ermöglicht es weiterhin, daß jeweils mehrere Zeichenelemente nacheinander durch wenigstens einen in der Ebene der Lesetafel relativ zu dieser versetzbaren Stempel betätigbar sind. Es ist beispielsweise denkbar, daß ein einziger Stempel die gesamte Lesefläche nach Art eines Druckkopfes überstreicht und nacheinander alle zu setzenden Zeichenelemente betätigt. Um den Schreibvorgang jedoch zu beschleunigen, ist in einer bevorzugten Ausgestaltung der Erfindung vorgesehen, daß z.B. zum Setzen der Zeichenelemente eine einer Zeile bzw. einer Spalte der Lesetafel entsprechend angeordnete Reihe von Stempeln vorgesehen ist und daß die Lesetafel und die Stempelreihe jeweils relativ zueinander in Spaltenrichtung bzw. in Zeilenrichtung versetzbar sind. Auf diese Weise lassen sich alle Zeichenelemente einer Spalte bzw. einer Reihe gleichzeitig betätigen; durch schrittweises Versetzen der Lesetafel bzw. der Stempelreihe in Zeilenrichtung bzw. Spaltenrichtung läßt sich die ganze Lesetafel beschreiben.

In einer besonders einfachen Ausgestaltung sind die Zeichenelemente als in ihrer gesetzten Lage aus der Lesetafel vorspringende, kappenartige Noppen aus einem elastischen Material ausgebildet, welche zum Löschen einstülpbar sind. Die eingestülpte bzw. ausgestülpte Lage der Noppen sind relativ stabile Lagen, welche durch die Finger der lesenden Person nicht verändert werden können. Dennoch ist die zum Einstülpen bzw. Ausstülpen der Noppen erforderliche Kraft gering, so daß die Betätigungsantriebe zum Bewegen der Stempel klein gehalten werden können.

In weiterer Ausgestaltung der Erfindung ist vorgesehen, daß die Lesetafel als in Zeilenrichtung bzw. in Spaltenrichtung bewegbares endloses Band ausgebildet ist und daß die Stempelreihen jeweils ortsfest angeordnet sind. Das in Zeilenrichtung bewegbare Band bewegt sich über eine in Spaltenrichtung angeordnete Stempelreihe hinweg; ein in Spaltenrichtung bewegbares Band bewegt sich dementsprechend über eine in Zeilenrichtung ortsfest angeordnete Stempelreihe hinweg, wie weiter hinten genauer beschrieben wird.

Mit der erfindungsgemäßen Einrichtung sind alle Zeichen des Bildschirmtext- bzw. Videotextsystems darstellbar, mit Ausnahme der Farben und der helligkeitsinversen Zeichendarstellung. Da die Zeicheninversion im allgemeinen keine wesentliche Information enthält, ist vorgesehen, daß die Steuereinrichtung Mittel zum Unterdrücken des Inversionsbefehls aufweist.

In weiterer Ausgestaltung der Erfindung enthält die Steuereinrichtung auch Mittel zum Unterdrücken von Zeichen einer oder mehrerer bestimmter, auf dem Bildschirm dargestellter Farben, so daß auf der Lesetafel nur Bildinhalte einer gewünschten Farbe dargestellt werden. Komplizierte Graphiken können auf diese Weise entwirrt werden.

Häufig gehen farbige Flächen bei Bildschirmtext ineinander über. Wenn in diesem Fall beispielsweise nur die Hell-Dunkelinformation der Graphiksymbole ausgewertet wird, sind die Bilder nicht mehr zu ertasten. Wird aber die Farbinformation des Videotext- bzw. Bildschirmtextsignals mitausgewertet, so kann das Setzen der Noppen in der Farbfläche unterdrückt werden und nur die Zeichen werden gesetzt, deren Nachbarzeichen eine andere Farbe haben. Flächige Graphiken erscheinen dann nur als Konturbilder.

Zu diesem Zweck weist die Steuereinrichtung Mittel zur ausgewählten Darstellung von an den Grenzen bestimmter Farbfelder der Bildschirmseite angeordneten Zeichen sowie zum Unterdrücken der innerhalb dieser Farbfelder angeordneten Zeichen auf.

Außerdem kann die Steuereinrichtung Mittel aufweisen, welche wahlweise nur die alphanumerischen Zeichen oder die graphischen Zeichen einer beide Zeichenarten enthaltenden Bildschirmseite darzustellen erlaubt. Auf diese Weise ist es möglich, zunächst die Graphik zu erkennen, ohne durch den eingestreuten Text irritiert zu werden. Der Text ist dann als Folgebild abrufbar.

In einer weiteren Ausgestaltung der Erfindung enthält die Steuerung Mittel zur vergrößerten Darstellung von Ausschnitten einer Bildschirmseite auf der Lesetafel.

Mehrere Ausführungsbeispiele der Erfindung sind in der Zeichnung dargestellt und im folgenden näher beschrieben. Es zeigen:

Fig. 1 einen Ausschnitt aus einer Lesetafel mit einer für die Darstellung von Schriftzeichen bestimmten Aufteilung der Zeichenelemente;

Fig. 2 einen Ausschnitt aus einer Lesetafel mit einer vorzugsweise für die Darstellung von Graphiken ausgelegten Aufteilung der Zeichenelemente;

Fig. 3 bis 6 verschiedene Darstellungen von Zeichen in einem Zeichenfeld der Lesetafel;

Fig. 7 schematisch eine Steuereinrichtung zum Beschreiben einer Lesetafel;

Fig. 8 ein einzelnes Zeichenelement in einem Längsschnitt in gesetzter Lage;

Fig. 9 ein Zeichenelement in gelöschter Lage;

Fig. 10 eine als in Zeilenrichtung bewegbares Band ausgebildete Lesetafel;

Fig. 11 eine als in Spaltenrichtung bewegbares Band ausgebildete Lesetafel.

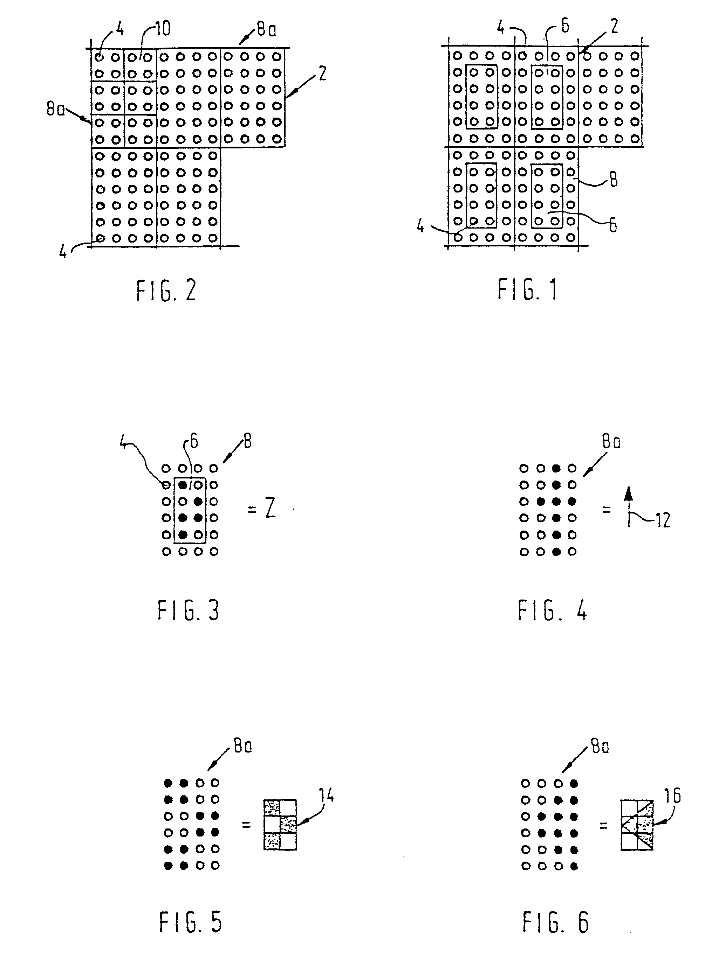

Fig. 1 zeigt einen Ausschnitt aus einer Lesetafel 2, die mit einer Vielzahl von Zeichenelementen 4 besetzt ist. Die Zeichenelemente sind in Zeilen und Spalten mit gleichmäßigem Zeilen- und Spaltenabstand angeordnet. In der Gesamtmenge der Zeichenelemente sind bestimmte innere Bereiche 6 definiert, welche zur Darstellung je eines Blindenschriftzeichens bestimmt sind. In dem in Fig. 1 dargestellten Ausführungsbeispiel enthält jeder der inneren Bereiche 6 jeweils 2 × 4 Zeichenelemente und entspricht damit der bekannten Anordnung zur Darstellung des 8-Punkt-Braille-Codes. Jeder der inneren Bereiche 6 ist allseitig einreihig von Zeichenelementen umgeben und zu einem äußeren Zeichenfeld 8 ergänzt. Jedes äußere Zeichenfeld 8 enthält 4 × 6 Zeichenelemente.

Zur Darstellung von Schriftzeichen werden nur die inneren Bereiche 6 verwendet, während die diese umrahmenden Zeichenelemente gelöscht sind. Die inneren Bereiche 6 haben damit jeweils einen deutlichen Abstand voneinander, so daß die Braille-Zeichen nicht ineinanderfließen. Wie weiter vorne beschrieben wurde, entspricht die Anordnung und Anzahl der Zeichenfelder 8 auf der Lesetafel 2 der Anordnung und Anzahl von Zeichen einer Bildschirmseite im Video- bzw. Bildschirmtextsystem. Es sind demnach 24 Zeilen zu je 40 äußeren Zeichenfeldern 8 vorgesehen.

Der in Fig. 2 dargestellte Ausschnitt aus der Lesetafel 2 entspricht dem in Fig. 1 dargestellten Ausschnitt. Es lassen sich wiederum in der Gesamtmenge der Zeichenelemente einzelne Felder definieren. Im vorliegenden Fall entsprechen diese Felder den äußeren Zeichenfeldern 8 gemäß Fig. 1. Jedes dieser Zeichenfelder kann als Matrixblock 8a mit jeweils 2 × 3 Unterfeldern 10 aufgefaßt werden, wie in Fig. 2 links oben dargestellt ist. Jedes Unterfeld 10 ist seinerseits wiederum durch eine 2 × 2 Matrix von Zeichenelementen 4 gebildet. Es sei an dieser Stelle nochmals darauf hingewiesen, daß die Aufteilung der Gesamtmenge der Zeichenelemente in einzelne Felder rein organisatorisch zu verstehen ist und beispielsweise auf schaltungstechnischem oder steuerungstechnischem Wege erfolgt. Die in den Fig. 1 und 2 dargestellten Begrenzungslinien der einzelnen Felder existieren nicht wirklich sondern dienen nur der besseren Anschaulichkeit. Der Matrixblock 8a in Fig. 2 eignet sich insbesondere zur Wiedergabe der bei Videotext- und Bildschirmtextseiten verwendeten Graphiksymbole, welche bekanntlich jeweils 2 × 3 Bildelemente aufweisen und welche ebenfalls jeweils die Fläche eines Schriftzeichens einnehmen. Auf der Lesetafel 2 lassen sich demnach ohne weiteres alle auf dem Bildschirm mittels Graphiksymbolen aufgebauten Graphikdarstellungen wiedergeben, indem beispielsweise dunkle Bildpunkte durch gesetzte Zeichenelemente, helle Bildpunkte durch gelöschte Zeichenelemente dargestellt werden.

Die Fig. 3 bis 6 zeigen jeweils ein Zeichenfeld 8 bzw. 8a mit in diesen Zeichenfeldern dargestellten Zeichen. In Fig. 3 wird nur der innere Bereich 6 zur Darstellung eines Schriftzeichens im Braille-Code benutzt. Dunkle Punkte entsprechen gesetzten Zeichenelementen, helle Punkte gelöschten Zeichenelementen. Das dargestellte Zeichen ist der Großbuchstabe Z in Braille-Schrift. Die den inneren Bereich 6 umrandenden Zeichenelemente 4 sind gelöscht. Auf diese Weise ist jede Braille-Form durch zwei Punktabstände von der Nachbarform getrennt, so daß die einzelnen Zeichen nicht ineinanderfließen.

Fig. 4 zeigt ein Zeichenfeld 8a, bei welchem über die Braille-Form hinausgehende, jedoch innerhalb eines Zeichenfeldes darstellbare Symbole wiedergegeben werden können. Fig. 4 zeigt beispielhaft die Wiedergabe des neben dem Zeichenfeld dargestellten Pfeilsymbols 12.

In Fig. 5 ist das Zeichenfeld 8a entsprechend Fig. 2, links oben als 2 × 3 Matrixblock aufgeteilt. Das neben dem Zeichenfeld 8a dargestellte Graphiksymbol 14, welches auf Bildschirmseiten zur Darstellung großflächiger Graphiken verwendet wird, wird auf der Lesetafel in der in Fig. 5 ausgeführten Weise dargestellt.

Fig. 6 zeigt ein Zeichenfeld 8a, in welchem das rechts neben diesem Zeichenfeld dargestellte Graphiksymbol 16 aus dem vorgesehenen erweiterten Videotext-Zeichensatz wiedergegeben ist.

Mit dem nur als Beispiel genannten Zeichenfeld von 4 × 6 Zeichenelementen ist nur eine grobe Auflösung der Graphikzeichen möglich. 4 × 6 Punkte stellen die Mindestpunktzahl dar. Durch eine Erhöhung der Punktzahl ist eine bessere Auflösung möglich, eine ungerade Reihen- und Spaltenzahl läßt einen symmetrischen Zeichenaufbau bei schrägen Linien zu, quaderförmige Zeichen werden aber verzerrt. Da der Punktabstand nicht unter ein bestimmtes Mindestmaß verringert werden kann, ohne die Lesbarkeit zu beeinträchtigen, ist eine Erhöhung der Punktzahl nur durch Vergrö- ßerung des Wiedergabefeldes erreichbar. Dabei besteht die Gefahr, daß die Lesetafel unübersichtlich wird.

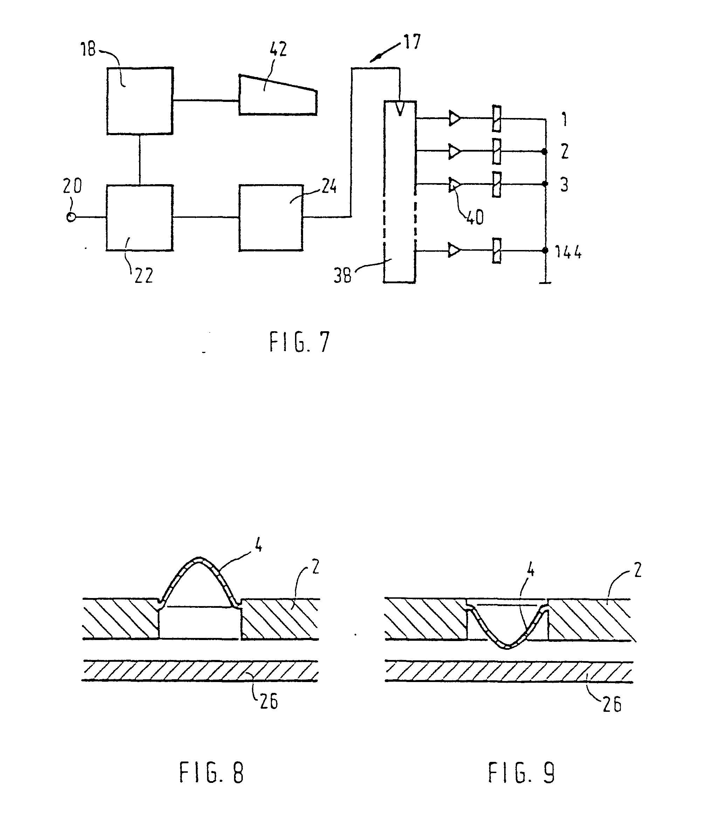

Fig. 7 zeigt schematisch eine Steuereinrichtung 17 zur Ansteuerung einer für die Wiedergabe von Bildschirmseiten bestimmten taktilen Lesetafel. Unter der Kontrolle eines Mikroprozessors 18 werden die an den Eingangsklemmen 20 anliegenden Bildinformationssignale in den Seitenspeicher 22 geladen. Von dort gelangen sie zu einem Zeichengenerator 24, welcher die Bildinformationssignale in den Punktrastercode der Lesetafel umsetzt. Der Zeichengenerator steuert in geeigneter, weiter hinten genauer beschriebener Weise die Betätigungsantriebe für die Zeichenelemente an, bis die Bildschirmseite auf die Lesetafel übertragen ist.

Um die für die Darstellung einer Bildschirmseite erforderliche Anzahl von Zeichen auf einer Lesetafel mit ergonomisch vernünftigen Abmessungen unterzubringen, müssen die Zeichenelemente und vor allem ihre Betätigungsantriebe sehr einfach aufgebaut sein. Fig. 8 zeigt in einem Längsschnitt ein Zeichenelement 4, welches als in seiner gesetzten Lage aus der Lesetafel 2 vorspringender, kappenartiger Noppen aus einem elastischen Material ausgebildet ist. Zum Löschen läßt sich dieser Noppen einstülpen, wie Fig. 9 zeigt. Zur Betätigung der Noppen können beispielsweise einfache in Setzrichtung bzw. Löschrichtung wirkende Stempel verwendet werden, deren seitlicher Platzbedarf nicht über den der Noppen hinausgeht. Die Noppen 4 sind mit der Lesetafel 2 einstückig ausgebildet und aus einem elastischen Material hergestellt. Zur Unterstützung der elastischen Lesetafel dient beispielsweise eine feste Unterlage 26.

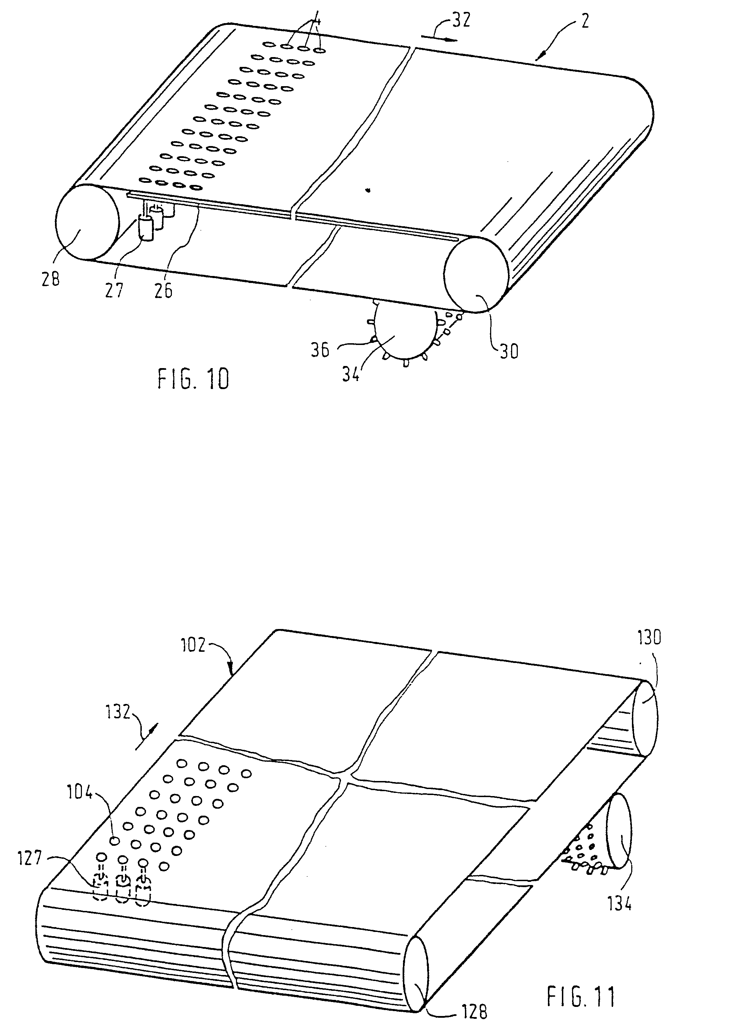

Fig. 10 zeigt eine Lesetafel 2, welche als endloses, in Zeilenrichtung bewegbares Band ausgebildet ist. Dieses wird über zwei Umlenkrollen 28, 30 geführt. Im Lesebereich läuft das Band über eine feste Unterlage 26. Zum Setzen der Zeichenelemente 4 dienen unter dem oberen Trum des Bandes 2 in Spaltenrichtung angeordnete Stempel 27, welche jeweils gleichzeitig die Zeichenelemente einer Spalte betätigen können. Nach dem Setzen einer Spalte wird das Band 2 in Richtung des Pfeiles 32 um einen Punktabstand weiterbewegt, so daß die nächste Spalte geschrieben werden kann, bis die gesamte Lesetafel geschrieben ist. Zum Löschen der Zeichenelemente dient eine gegen das untere Trum des Bandes 2 anliegende Löschwalze 34, deren Mantelfläche entsprechend der Anordnung der Zeichenelemente auf dem Band 2 mit Vorsprüngen 36 besetzt ist. Diese Vorsprünge stülpen die Zeichenelemente 4 in ihre gelöschte Lage zurück, wie Fig. 9 zeigt. Die ausgestülpte bzw. eingestülpte Lage der Noppen 4 ist jeweils eigenstabil, so daß sie durch den Tastdruck der Finger der lesenden Person nicht umgerichtet werden können. Mittel zum Festhalten der Noppen in ihren jeweiligen Lagen sind deshalb nicht erforderlich.

Fig. 11 zeigt eine Lesetafel 102, welche als in Spaltenrichtung bewegbares endloses Band ausgebildet ist. Es wird über Umlenkrollen 128, 130 geführt und auf eine beliebige, nicht näher dargestellte Weise in Richtung des Pfeiles 132 bewegt. Unterhalb des oberen Trums des Bandes 102 sind in Zeilenrichtung Betätigungsstempel 127 angeordnet, welche jeweils gleichzeitig eine Noppenzeile setzen können. Bei dieser Anordnung entsteht das Bild bzw. der Text auf der Lesetafel zeilenweise. Dabei ergibt sich insbesondere bei der Wiedergabe von Texten in Blindenschrift die Möglichkeit, die geschriebenen Zeilen zu lesen, bevor die gesamte Lesetafel beschrieben ist. Zum Löschen der Zeichenelemente 104 dient wiederum eine gegen das untere Trum des Bandes 102 anliegende Löschwalze 134.

Während die Bildinformationen vom Bildschirmgerät Zeichen für Zeichen und Zeile für Zeile in den Seitenspeicher 12 (siehe Fig. 7) geladen werden, erfolgt die Übertragung auf die Lesetafeln gemäß den Fig. 10 und 11 in der Weise, daß die Noppenspalten bzw. Noppenzeilen nacheinander gesetzt werden. Das soll am Beispiel einer Lesetafel gemäß Fig. 10 erläutert werden. Der Zeichengenerator 24 gibt die Punktrastercode der ersten Noppenspalte auf der linken Seite der Lesetafel 2 aus und lädt sie in ein Schieberegister 38. Jede der beispielsweise 144 Stellen des Schieberegisters 38 entspricht einem Stempel 27 (wie vorne erläutert wurde, weist die Lesetafel 2 24 Zeichenfeld-Zeilen mit je 6 Noppenzeilen auf). Nachdem das Schieberegister 38 geladen ist, werden über Verstärker 40 die Betätigungsstempel 27 entsprechend dem Punktrastercode dieser ersten Noppenspalte angesteuert. Dann wird ein im Zeichengenerator befindlicher Spaltenzähler um einen Schritt fortgeschaltet und die zweite Spalte entsprechend ihrem Punktrastercode gesetzt usw., bis die gesamte Lesetafel 2 beschrieben ist.

An den Mikroprozessor 18 ist eine Steuertastatur 42 angeschlossen. Mit dieser können Steuerbefehle ausgegeben werden wie etwa
– neues Bild
– Unterdrücke alle Zeichen einer Farbe (zur besseren Lesbarkeit farblich ineinanderverschachtelter Farbgraphiken)
– Vergrößerte Ausgabe eines Bildteils
usw.

Auf der Lesetafel können neben Video- und Bildschirmtext auch Informationen wie Landkarten, Stadtpläne usw. dargestellt werden. Auch ist die Lesetafel für Unterrichtszwecke geeignet. So können z.B. Schriftzeichen als flächige taktile Darstellungen des Schwarzschriftzeichens neben dem gleichlautenden Braille-Zeichen abgebildet werden.

**Patentansprüche**

1. Einrichtung zur Darstellung von Informationen auf einem Lesegerät für Blinde, mit matrixartig in gleichmäßiger Rasterung auf einer Lesetafel (2) angeordneten, jeweils in eine aus der Lesetafel (2) vorspringende, gesetzte Stellung und eine zurückgezogene, gelöschte Stellung einstellbaren Zeichenelementen (4), welche zur Blindenschrift-und/oder bildhaften Informationsdarstellung über eine Steuerschaltung ansteuerbar sind, wobei Mittel zum Setzen und Löschen der Zeichenelemente (4) vorgesehen sind, dadurch gekennzeichnet, daß die Steuerschaltung (17) die Gesamtheit aller Zeichenelemente (4) in einzelnen Zeichenfeldern (8, 8a) ansteuert, die zeilen- und spaltenartig angeordnet sind und aus einer Mehrzahl von Zeichenelementen (4) bestehen, und dabei zur Darstellung von Grafiksymbolen, z.B. Bildschirmtext-Grafiksymbolen, in jedem Zeichenfeld (8, 8a) 2 × 3 jeweils aus einer Mehrzahl von Zeichenelementen (4) bestehende Unterfelder (10) aktiviert oder zur Darstellung von Blindenschrift in jedem Zeichenfeld (8, 8a) Zeichenelemente (4) in einem Bereich (6) innerhalb eines Randbereichs aus nicht gesetzten Zeichenelementen (4) aktiviert.

2. Einrichtung nach Anspruch 1, dadurch gekennzeichnet, daß die Lesetafel (2) eine der Anzahl und Anordnung der Zeichen einer Bildschirmseite entsprechende Anzahl und Anordnung von Zeichenfeldern (8, 8a) aufweist.

3. Einrichtung nach Anspruch 1 oder 2, dadurch gekennzeichnet, daß die Bereiche (6) für die Blindenschriftzeichen an allen Seiten jeweils wenigstens einreihig von Zeichenelementen (4) umrahmt sind.

4. Einrichtung nach einem der Ansprüche 1 bis 3, dadurch gekennzeichnet, daß die Zeichenfelder (8, 8a) aus 4 × 6 Zeichenelementen (4) und die Bereiche (6) für die Blindenschriftzeichen als Braille-Formen mit vorzugsweise acht Zeichenelementen (4) ausgebildet sind.

5. Einrichtung nach einem der Ansprüche 1 bis 4, dadurch gekennzeichnet, daß die Unterfelder (10) jeweils durch eine quadratische Matrix von Zeichenelementen, vorzugsweise durch eine 2 × 2-Matrix von Zeichenelementen (4) gebildet werden.

6. Einrichtung nach einem der Ansprüche 1 bis 5, dadurch gekennzeichnet, daß die Mittel zum Setzen und Löschen der Zeichenelemente (4) jeweils diesen zugeordnete elektrische Betätigungsantriebe (27, 127) sowie eine Steuereinrichtung (17) zum Ansteuern der Betätigungsantriebe umfassen.

7. Einrichtung nach Anspruch 6, dadurch gekennzeichnet, daß die Steuereinrichtung (17) eine an ein Bildschirmgerät oder dgl. anschließbare Speichereinheit (22) zum Speichern wenigstens der eine Bildschirmseite bildenden Informationssignale und einen Zeichengenerator (24) zum Umsetzen dieser Informationssignale in ein der Bildschirmseite entsprechendes, auf der Lesetafel (2) darstellbares Zeichenmuster sowie zum Ansteuern der Zeichenelemente (4) entsprechend diesem Zeichenmuster umfaßt.

8. Einrichtung nach einem der Ansprüche 1 bis 7, dadurch gekennzeichnet, daß die Zeichenelemente (4) in ihrer gesetzten bzw. gelöschten Stellung jeweils eigenstabile Lagen einnehmen und daß als Mittel zum Setzen bzw. Löschen der Zeichenelemente jeweils in Setzrichtung bzw. in Löschrichtung auf diese wirkende Stempel (27, 127) oder dgl. vorgesehen sind.

9. Einrichtung nach Anspruch 8, dadurch gekennzeichnet, daß jeweils mehrere Zeichenelemente (4) nacheinander durch wenigstens einen in der Ebene der Lesetafel relativ zu dieser versetzbaren Stempel (27, 127) betätigbar sind.

10. Einrichtung nach Anspruch 9, dadurch gekennzeichnet, daß eine einer Zeile bzw. einer Spalte entsprechend angeordnete Reihe von Stempeln (27, 127) vorgesehen ist und daß die Lesetafel (2, 102) und die Stempelreihe jeweils relativ zueinander in Spaltenrichtung bzw. in Zeilenrichtung versetzbar sind.

11. Einrichtung nach einem der Ansprüche 8 bis 10, dadurch gekennzeichnet, daß die Zeichenelemente (4, 104) als in ihrer gesetzten Lage aus der Lesetafel (2, 102) vorspringende kappenartige Noppen aus einem elastischen Material ausgebildet sind.

12. Einrichtung nach einem der Ansprüche 10 oder 11, dadurch gekennzeichnet, daß die Lesetafel (2, 102) als in Zeilenrichtung bzw. in Spaltenrichtung bewegbares endloses Band ausgebildet ist und daß die Stempel (27, 127) jeweils ortsfest angeordnet sind.

13. Einrichtung nach einem der Ansprüche 7 bis 12, dadurch gekennzeichnet, daß die Steuereinrichtung (17) Mittel zum Unterdrücken der Inversionsbefehle für die Darstellung helligkeitsinverser Zeichen des Bildschirmgerätes aufweist.

14. Einrichtung nach einem der Ansprüche 7 bis 13, dadurch gekennzeichnet, daß die Steuereinrichtung (17) Mittel zum Unterdrücken von Zeichen einer oder mehrerer bestimmter auf dem Bildschirm dargestellter Farben aufweist.

15. Einrichtung nach einem der Ansprüche 7 bis 14, dadurch gekennzeichnet, daß die Steuereinrichtung (17) Mittel zur ausgewählten Darstellung von an den Grenzen von bestimmten Farbfeldern der Bildschirmseite angeordneten Zeichen sowie zum Unterdrücken der innerhalb dieser Farbfelder angeordneten Zeichen aufweist.

16. Einrichtung nach einem der Ansprüche 7 bis 15, dadurch gekennzeichnet, daß die Steuereinrichtung (17) Mittel zur ausgewählten Darstellung entweder nur der graphischen oder alphanumerischen Zeichen einer beide Zeichenarten enthaltenden Bildschirmseite aufweist.

17. Einrichtung nach einem der Ansprüche 7 bis 16, dadurch gekennzeichnet, daß die Steuereinrichtung (17) Mittel zur vergrößerten Darstellung von Ausschnitten einer Bildschirmseite auf der Lesetafel aufweist.

**Claims**

1. Device for the display of data on a reading apparatus for the blind with sign elements (4) arranged matrix-like in uniform grid pattern on a .reading board (2), respectively adjustable in a set position protruding from the reading board (2) and in a retracted blanked out position, which sign elements can be controlled by means of a control circuit for the representation of letters and/or pictures for the blind, means being provided for setting and deleting the sign elements (4), characterized in that the control circuit (17) controls the entirety of all sign elements in individual sign cells (8, 8a) which are arranged in lines and columns, and consist in a plurality of sign elements (4), and in conjunction with this the control circuit activates 2×3 sub-cells (10) consisting respectively of a plurality of sign elements in each sign cell (8, 8a) for the representation of graphic symbols, e.g., view data graphic symbols, or activates in each sign cell (8, 8a) sign elements (4) in an area (6) inside a border area which has not been set, for the representation of lettering for the blind.

2. Device according to Claim 1, characterized in that the reading board (2) has a number and an arrangement of sign cells (8, 8a) corresponding to the number and arrangement of the signs of a display page.

3. Device according to Claim 1 or Claim 2, characterized in that the areas (6) for the letter signs are framed on all sides respectively by at least one row of sign elements (4).

4. Device according to one of Claims 1 to 3, characterized in that the sign cells (8, 8a) are formed of 4×6 sign elements (4) and the areas (6) for the letter signs are designed as Braille cells with preferably eight sign elements (4).

5. Device according to one of Claims 1 to 4, characterized in that the sub-cells (10) are respectively formed by a quadratic matrix of sign elements, preferably by a 2×2 matrix of sign elements (4).

6. Device according to one of Claims 1 to 5, characterized in that the means for setting and deleting the sign elements (4) respectively comprise electric actuation drives (27, 127) associated with them, as well as a control device (17) for controlling the actuation drives.

7. Device according to Claim 6, characterized in that the control device (17) comprises a storage unit (22) connectable to a display unit or the like for storing at least the data signals forming a display page, and a sign generator (24) for converting said data signals into a pattern of signs displayable on the reading board (2) and corresponding to the display page, as well as for the control of the sign elements (4) correspondingly to this pattern of signs.

8. Device according to one of Claims 1 to 7, characterized in that the sign elements (4) in their set or blanked out position respectively assume inherently stable positions, and in that, as means for setting or blanking out the sign elements provision is made for punches (27, 127) or the like acting on them respectively in setting or blanking out direction.

9. Device according to Claim 8, characterized in that several sign elements (4) are respectively actuatable in succession by at least one punch (27, 127) settable in the plane of the reading board relative to them.

10. Device according to Claim 9, characterized in that provision is made for a row of punches (27, 127) correspondingly mounted to one line or column, and in that the reading board (2, 102) and the row of punches are respectively settable relatively to one another in column direction or in line direction.

11. Device according to one of Claims 8 to 10, characterized in that the sign elements (4, 104) are designed as cap-like knobs in an elastic material protruding from the reading board (2, 102) in their set position.

12. Device according to either Claim 10 or 11, characterized in that the reading board (2, 102) is constructed as an endless band movable in line direction or column direction and that the punches (27, 127) are respectively stationarily mounted.

13. Device according to one of Claims 7 to 12, characterized in that the control device (17) has means for suppressing the inversion commands for the display of brightness-inverse signs of the display apparatus.

14. Device according to one of Claims 7 to 13, characterized in that the control device (17) has means for suppressing signs of one or more specific colours shown on the display.

15. Device according to one of Claims 7 to 14, characterized in that the control device (17) has means for the selective display of signs arranged at the borders of specific colours areas of the display page as well as for the suppression of the signs arranged within said colour areas.

16. Device according to one of Claims 7 to 15, characterized in that the control device (17) has means for the selective display of either only the graphic or only the alphanumeric signs of one display page containing both kinds of signs.

17. Device according to one of Claims 7 to 16, characterized in that the control device (17) has means for the magnified display of extracts of one display page on the reading board.

**Revendications**

1. Agencement pour la présentation d'informations sur un appareil de lecture pour aveugles, avec des éléments de signe (4) disposés en trame régulière à la manière d'une matrice sur un tableau de lecture (2), réglable chacun à une position active saillante sur le tableau de lecture (2) et à une position rentrée effacée, ces éléments de signe étant commandables à l'aide d'un circuit de commande pour la présentation d'informations en caractères d'écriture pour aveugles et/ou de manière graphique, des moyens étant prévus pour activer et pour effacer les éléments de signe (4), caractérisé en ce que le circuit de commande (17) commande la totalité des éléments de signe (4) dans des champs de signes (8, 8a) élémentaires qui sont disposés en lignes et en colonnes et sont constitués par une multiplicité d'éléments de signe (4) et en ce que, pour représenter des symboles graphiques, par exemple des symboles graphiques de texte d'écran de visualisation, dans chaque champ de signes (8, 8a) sont activées 2×3 sous-champs (10) composés d'une multiplicité d'éléments de signe (4), ou pour la représentation d'une écriture pour aveugles sont activés dans chaque champ de signes (8, 8a) des éléments de signe (4) compris dans une zone (6) située à l'intérieur d'une zone périmétrique d'éléments de signe (4) non activés.

2. Agencement selon la revendication 1, caractérisé en ce que le tableau de lecture (2) présente un nombre et une disposition de champs de signes (8, 8a) correspondant au nombre et à la disposition des signes d'une page d'écran de visualisation.

3. Agencement selon la revendication 1 ou 2, caractérisé en ce que les zones (6) pour les signes d'écriture pour les aveugles sont encadrés sur tous les côtés par une rangée au moins d'éléments de signe (4).

4. Agencement selon l'une quelconque des revendications 1 à 3, caractérisé en ce que les champs de signe (8, 8a) sont composés de 4 × 6 éléments de signe (4) et les zones (6) pour les signes d'écriture pour les aveugles sont composées de préférence de huit éléments de signe (4) sous forme de caractères Braille.

5. Agencement selon l'une quelconque des revendications 1 à 4, caractérisé en ce que les sous-champs (10) sont composés chacun d'une matrice carrée d'éléments de signe, de préférence une matrice de 2 × 2 éléments de signe (4).

6. Agencement selon l'une quelconque des revendications 1 à 5, caractérisé en ce que les moyens pour activer et effacer les éléments de signe (4) comprennent des mécanismes électriques d'actionnement (27, 127) associés respectivement à chacun de ces éléments de signe ainsi qu'un dispositif de commande (17) pour la commande des mécanismes d'actionnement.

7. Agencement selon la revendication 6, caractérisé en ce que le dispositif de commande (17) comprend une unité de mémoire (22) pouvant être reliée à un appareil à écran de visualisation, ou à un appareil analogue, pour la mise en mémoire au moins des signaux d'information formant une page d'écran de visualisation et un générateur de signes (24) pour transformer ces signaux d'information en une configuration de signes correspondante à la page d'écran de visualisation, pouvant être représentée sur le tableau de lecture (2), ainsi que pour la commande des éléments de signe (4) en correspondance avec cette configuration de signes.

8. Agencement selon l'une quelconque des revendications 1 à 7, caractérisé en ce que les éléments de signe (4) ont à leur position active et à leur position effacée un état de stabilité propre et en ce qu'il est prévu comme moyen pour activer et effacer chacun des éléments de signe des poinçons (27, 127) ou des éléments analogues agissant sur eux dans le sens de l'activation et dans le sens de l'effacement.

9. Agencement selon la revendication 8, caractérisé en ce que plusieurs éléments de signe (4) respectivement peuvent être actionné successivement par au moins un poinçon (27, 127) déplaçable dans le plan du tableau de lecture par rapport à ce dernier.

10. Agencement selon la revendication 9, caractérisé en ce qu'il est prévu une rangée de poinçons (27, 127) en correspondance avec une rangée ou à une colonne, et en ce que le tableau de lecture (2, 102) et la rangée de poinçons sont déplaçables l'un par rapport à l'autre respectivement dans le sens de la colonne et dans le sens de la ligne.

11. Agencement selon l'une quelconque des revendications 8 à 10, caractérisé en ce que les éléments de signe (4, 104) sont réalisés en matière élastique conformés à leur position saillante sur le tableau de lecture (2, 102) en protubérances analogues à des capuchons.

12. Agencement selon la revendication 10 ou 11, caractérisé en ce que le tableau de lecture (2, 102) est réalisé comme une bande sans fin déplaçable dans le sens des lignes ou dans le sens des colonnes, et les poinçons (27, 127) sont disposés chacun à un poste fixe.

13. Agencement selon l'une quelconque des revendications 7 à 12, caractérisé en ce que le dispositif de commande (17) comprend des moyens pour supprimer les instructions d'inversion pour la représentation de signes à inversion de luminance de l'appareil à écran de visualisation.

14. Agencement selon l'une quelconque des revendications 7 à 13, caractérisé en ce que le dispositif de commande (17) comprend des moyens pour supprimer les signes d'une couleur ou de plusieurs couleurs déterminées représentées sur l'écran de visualisation.

15. Agencement selon l'une quelconque des revendications 7 à 14, caractérisé en ce que le dispositif de commande (17) comprend des moyens pour la représentation choisie de signes disposés aux limites de champs de couleurs déterminés de la page d'écran de visualisation ainsi que pour supprimer les signes disposés à l'intérieur de ces champs de couleur.

16. Agencement selon l'une quelconque des revendications 7 à 15, caractérisé en ce que le dispositif de commande (17) comprend des moyens pour la représentation choisie seulement soit des signes graphiques, soit des signes alphanumériques d'une page d'écran de visualisation contenant les deux genres de signes.

17. Agencement selon l'une quelconque des revendications 7 à 16, caractérisé en ce que le dispositif de commande (17) comprend des moyens pour la représentation agrandie sur le tableau de lecture d'extraits d'une page d'écran de visualisation.

FIG. 2

FIG. 1

FIG. 3

= Z

FIG. 4

= ↑ 12

FIG. 5

= 14

FIG. 6

= 16

FIG. 7

FIG. 8

FIG. 9

FIG. 10

FIG. 11